# EUROPEAN PATENT SPECIFICATION

(11) **EP 3 950 382 B1**
(45) Date of publication and mention of the grant of the patent: **29.05.2024**
(21) Application number: 21189163.5
(22) Date of filing: 02.08.2021
(51) Int. Cl.: B60C 5/02, B60C 5/04, B60C 17/00, B60C 17/10

(54) **TIRE, WHEEL AND VEHICLE**
REIFEN, RAD UND FAHRZEUG
PNEU, ROUE ET VÉHICULE

(30) Priority: 05.08.2020 CN 202010778773
(43) Date of publication of application: 09.02.2022
(73) Proprietor: Ninebot (Changzhou) Tech Co., Ltd., Changzhou, Jiangsu 213000 (CN)
(72) Inventor: WANG, Weixiang, Changzhou, 213000 (CN); JI, Xinjian, Changzhou, 213000 (CN); LUO, Jun, Changzhou, 213000 (CN)
(74) Representative: Manna, Sara

(56) References cited:
- GB-A- 835 334
- JP-A- 2009 083 717
- US-A- 3 837 064
- US-B2- 9 834 039

## Description

### FIELD

Embodiments of the present invention belong to a technical field of vehicle equipment, and more particularly relates to a tire, a wheel and a vehicle.

### BACKGROUND

With regard to an existing tire with a pneumatic inner tube, an inner tube is fitted with a tire casing, in the case of zero or low tire pressure, the tire casing would be flattened where the tire casing is in contact with the ground, and the tire casing and the hub will slip when vehicle travels. Since a valve of the inner tube is fixed on the hub, the inner tube and the tire casing will slide relative to each other, and due to tight fitting and a relatively high friction between the inner tube and the tire casing, the inner tube is easy to be worn out and then results in air leakage.

GB835334A relates to a multiple chambered tire. In a safety tubeless tyre and wheel rim assembly, the air space is divided into inner and outer chambers by an annular flexible air-impervious diaphragm, slip friction between opposed outer and inner surfaces of the diaphragm and tyre respectively when the diaphragm becomes operative on collapse of the outer chamber is reduced by providing on one or both such surfaces a layer of rubber having a lubricant physically embedded therein. The lubricant used must be heat stable, and incompatible with the rubber base to prevent absorption thereby. Suitable solid lubricants are those which have flat cleavage planes, such as graphite, mica and molybdenum disulphide, and these may be used in amounts up to 40% by weight of the mix. Liquid lubricants may be used either alone, or in combination with a solid lubricant, in amounts up to 5% of the mix, and such liquid lubricants include silicone oils, glycerine, castor oil, olive oil, transformer oil and like non-drying triolein oils or a chlorinated bi-phenyl. The rubber base of the mix may be natural, GR-S, GR-A, neoprene or butyl rubber or compatible blends thereof, and the lubricant may be incorporated in the base rubber by means of a banbury mixer, warm-up mill or the like. The composition may include the usual anti-oxidants, accelerators and vulcanizing agents and may be self-curing. The Specification includes a specific example of a composition based on 70/30 blend of natural rubber and a 75/25 copolymer of butadiene/styrene, in which blend is embedded 60 parts of graphite and 10 parts of castor oil.

JP2009083717A relates to a safety tire. The safety tire is provided with the tire and the air bladder arranged in the tire, and forming a hollow circular ring shape, and the safety tire has such a structure that a space is formed between the outer surface of the air bladder and the inner surface of the tire in an air filling state that these items are attached to a rim and a predetermined internal pressure is applied. By this, the air bladder is enlarged and deformed accompanied by the reduction of the internal pressure of the tire and the support of a load is taken over from the tire in the run flat state that the internal pressure of the tire is reduced, The tire is provided with a lubricant layer least at a part of an inner surface area contacted with the outer surface of the air bladder in the run flat state in the air filling state.

US9834039B2 discloses tire assemblies. In one embodiment a tire insert assembly includes an elastomeric tire insert constructed to be received within a tire, the tire having sidewalls and a tread portion. An upper crown surface of the tire insert and a lower surface of the tire define an outer chamber and the tire insert defines an inner chamber. The tire insert may be configured to support a substantial portion of the sidewall of the tire when the inner chamber is inflated.

US3837064A discloses a method and device for introducing inner tubes which are inflated to a predetermined pressure into tyres, and especially inner tubes of the so-called "puncture-proof" type.

### SUMMARY

In order to solve technical problems existing in a prior art, embodiments of the present invention provide a tire, a wheel and a vehicle.

In a first aspect, embodiments of the present invention provide a tire, the tire is defined in the independent claim 1, and the preferable features according to the present invention are defined in the dependent claims.

In a second aspect, embodiments of the present invention provide a wheel comprising the tire according to any of the above embodiments.

In a third aspect, embodiments of the present invention provide a vehicle comprising the wheel according to the second aspect.

Any embodiment in the present invention that does not fall within the scope of the present invention should be regarded as an example for understanding the present invention.

According to a technical solution provided by embodiments of the present invention, a lubricating layer is provided between the inner tube and the tire casing of the tire, so as to reduce friction force caused by relative sliding between the inner tube and the tire casing slide when the tire pressure is zero or insufficient, avoid the inner tube from being worn out and then causing the air leakage, and improve driving safety of the vehicle.

### BRIEF DESCRIPTION OF THE DRAWINGS

In order to describe the embodiments of the present invention or technical solutions in the prior art more clearly, the following will briefly introduce the accompanying drawings that need to be used in the description of the embodiments or the prior art. Obviously, the drawings in the following description are merely some embodiments of the present invention. For those skilled in the art, other drawings may be obtained based on these drawings without creative efforts.
FIG. 1 is a schematic cross-sectional view of a tire provided by an embodiment of the present invention;
FIG. 2 is an exploded perspective view of a tire provided by an embodiment of the present invention;
FIG. 3 is a schematic cross-sectional view A-A of FIG. 2;
FIG. 4 is a schematic cross-sectional view of an inner tube of a tire provided by an embodiment of the present invention;
FIG. 5 is a schematic cross-sectional view of a wheel provided by an embodiment of the present invention;

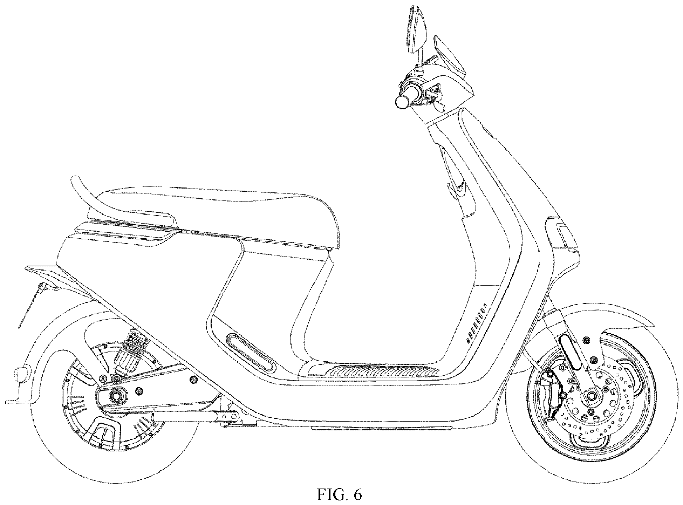

FIG. 6 is a schematic view of a vehicle according to an embodiment of the present invention.

### DETAILED DESCRIPTION

Implementations of the present invention will be described in detail below with reference to the accompanying drawings and embodiments, so as to fully understand and implement the realization process of how the present invention applies technical means to solve technical problems and achieve technical effects.

Some terms are used throughout the description and claims to refer to particular components. It should be understood by those skilled in the art that hardware manufacturers may refer to the same component in different terms. The description and claims do not intend to use differences in names as a way to distinguish components, but rather the differences in functions of the components as a criterion for distinction. For example, the term "include" mentioned throughout the description and the claims is used in an open-ended fashion, and thus should be interpreted as "include, but not limited to. "Substantially" refers to that, within an acceptable error range, those skilled in the art may solve the technical problem within a certain error range to substantially achieve the technical effect. In addition, the terms "coupled" or "electrically connected" herein encompass any direct or indirect electrical coupling means. Thus, if a first device is described to be coupled to a second device, it means that the first device may be directly electrically coupled to the second device, or indirectly electrically coupled to the second device via other devices or coupling means. The following specification is described as a preferred embodiment of the present invention, and the description is for the purpose of illustrating the general principles of the present invention and is not intended to limit the scope of the present invention. The scope of the present invention should be determined with reference to the appended claims.

It should also be noted that the terms "comprises", "comprising", or any other variation thereof, are intended to cover a non-exclusive inclusion, such that a process, method, article, or system that comprises a list of elements does not include only those elements but may include other elements not expressly listed or inherent to such process, method, article, or system. Without further limitation, an element defined by the phrase "comprising a ... ..." does not exclude the presence of other identical elements in the process, method, article, or system in which the element is included.

### DETAILED DESCRIPTION OF THE INVENTION

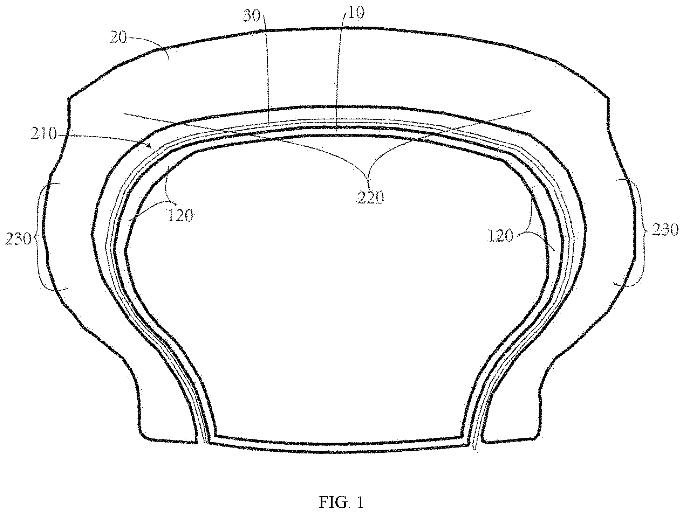

Referring to FIG. 1, a schematic cross-sectional view of a tire is provided for an embodiment of the present invention. The tire includes an inner tube 10, a tire casing 20, and a lubricating layer 30.

The inner tube 10 is a pneumatic tire, the tire casing 20 is defined with an inner cavity 210 in which the inner tube is provided, the tire casing 20 is a semi-closed annular structure and the lubricating layer 30 is provided between the inner tube 10 and the tire casing 20.

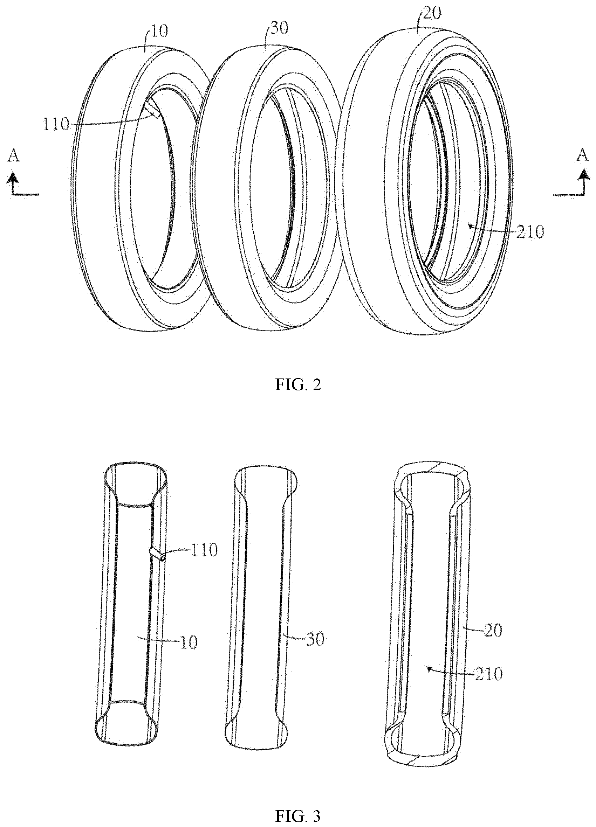

Specifically, referring to FIGS. 2 and 3, the inner tube 10 is an annular closed structure and provided with a valve 110, the valve 110 is provided on a surface of the inner tube 10 and extends toward a center of an annular closed structure, and the inner tube 10 may be inflated through the valve 110 to be a pneumatic tire. The material of the inner tube 10 includes but is not limited to, natural rubber, butyl rubber, etc., and the tire casing 20 is in a semi-closed annular structure, that is, a semi-closed inner cavity 210 is formed, and the inner tube 10 is put into the inner cavity 210 from an opening of the semi-closed annular structure, such that the tire casing 20 semi-wraps the inner tube 10 so as to protect the inner tube 10. Position of a part of the inner tube 10 corresponding to the opening of the semi-closed annular structure is not wrapped by the tire casing herein, and the valve 110 is provided at the position. The lubricating layer 30 is provided between the inner tube 10 and the tire casing 20. Specifically, the lubricating layer 30 is provided between an outer surface of the inner tube 10 and a surface of the inner cavity 210, the tire casing 20 completely wraps the lubricating layer 30, and the lubricating layer 30 covers a part of the outer surface of the inner tube 10, that is, the inner tube 10, the lubricating layer 30 and the tire casing 20 are laminated.

In use, if an air pressure of the inner tube 10 is around standard air pressure, a layered structure in tight contact is formed among the surface of the inner tube 10, the lubricating layer 30 and the tire casing 20 under tension of the inner tube 10, and the tire rotates normally on the road surface driven by a wheel hub. If the air pressure of the inner tube 10 is reduced to a certain extent or is zero, tension of the inner tube 10 is reduced or even disappears, the tire casing 20 is flattened by reaction force of the ground, and slip occurs between the tire casing 20 and the wheel hub when the wheel hub rotates. Since the inner tube 10 is fixed on the wheel hub by a valve 110, that is the inner tube 10 rotates along the wheel hub, and a relative slip inevitably occurs between the inner tube 10 and the tire casing 20. The tight fitting of the two and the reaction force of the ground against the tire casing 20 make friction force between the inner tube 10 and the tire casing 20 to be large, thereby causing the inner tube 10 easy to be worn out. However, in the embodiment of the present invention, the lubricating layer 30 is provided between the inner tube 10 and the tire casing 20, the friction force when the inner tube 10 and the tire casing 20 slide relative to each other may be effectively reduced by the lubricating layer 30, so as to avoid the inner tube 10 from being worn out and then causing the air leakage.

Each side of the inner tube 10 is provided with a tire shoulder 120, a thickness of each tire shoulder 120 is 1.1 to 2 times a thickness of any other part of the inner tube 10.

Herein, a plurality of tests show that when the thickness of each tire shoulder 120 of the inner tube 10 is 1.1-2 times the thickness of any other part of the inner tube 10, overall elasticity of the inner tube 10 may be ensured, thus deformation and deviation do not occur when the air pressure meets driving requirements, and when the air pressure of the inner tube 10 is reduced, the tire shoulders 120 of the inner tube 10 contract firstly and then is separated from the tire casing 20, such that the tire shoulders 120 of the inner tube 10 and the tire casing 20 do not rub with each other when the tire shoulders 120 of the inner tube 10 and the tire casing 20 slide relative to each other. In a preferred embodiment, the thickness of each tire shoulder 120 of the inner tube 10 is 1.2 times the thickness of any other part of the inner tube 10.

At least 4 layers of cord fabric are provided in the tire crown 220 of the tire casing 20.

At least 6 layers of the cord fabric are provided in two tire sides 230 of the tire casing 20, respectively.

Furthermore, specification of the cord fabric should not be less than 1260D/2. The cord fabric is woven from yarn, and the selected yarn is two yarns with a weight of not less than 1260 grams per 9000 meters to be twisted together to weave the cord fabric. The woven cord fabric has good toughness and strength.

Specifically, please refer to Tables 1 and 2 below.

Table 1 shows a comparison between a column pressure strength test and the outer tire test in a prior art, in which the column pressure strength test is performed when 4 layers of the cord fabric are provided in the tire crown 220, 6 layers of the cord fabric are provided in the tire side 230 and the specification of the cord fabric is 1260D/2.

**Table 1**

| | Comparative Examples | Embodiment |
|---|---|---|
| Specifications of cord fabric | 630D/2 | 1260D/2 |
| Number of layers of cord fabric in tire crown | 2 | 4 |
| Number of layers of cord fabric in tire side | 4 | 6 |
| Column pressure strength (J) | 35.6 | 87.2 |

Table 2 shows a comparison between a rigid displacement value test and a test in the prior art, in which the rigid displacement value test is preformed when the air pressure of the inner tube 10 is 344.75kPa, 206.85kPa and 0 kPa, using a needle with a column rod diameter of 8 mm, a head speed of 50 mm/min, and a load of 600 N:

**Table 2**

| | Prior art | | | This Example | | |
|---|---|---|---|---|---|---|
| Air pressure (kPa) | 344.75 | 206.85 | 0 | 344.75 | 206.85 | 0 |
| Load (N) | 600 | | | | | |
| Rigid displacement value (mm) | 7.21 | 10.77 | 13.21 | 5.34 | 7.13 | 8.19 |

As illustrated in Table 1, by increasing the number of layers of the cord fabric in the tire crown 220 and the number of layers of cord fabric in tire side 230 of the tire casing, and increasing the specification of the cord fabric, the column pressure strength of the tire casing 20 may be improved, ant that is the supportability of the tire casing 20 may be effectively increased, so as to ensure that the tire casing 20 does not collapse when the air pressure of the inner tube 10 decreases or even becomes zero and the tire casing 20 does not contact the tire casing 20 after the inner tube 10 contracts, thereby avoiding the inner tube 10 from being worn out by the friction when the inner tube 10 and the tire casing 20 slide relative to each other. Moreover, by improving the column pressure strength of the tire casing 20, risk of the tire being punctured may be effectively reduced, and driving safety of the vehicle is further improved.

Table 2 shows a rigidity test of the tire with an instron tensile machine under a certain load. As illustrated in the table, with the same applied load, a rigidity displacement value of the tire in the embodiment of the present invention at a plurality of air pressure values (344.75kPa, 206.85kPa and 0 kPa) is less than that of the tire in the prior art, which again proves that the tire of the embodiment of the present invention has better rigidity performance, such that the driving experience and the driving safety of the vehicle may be further improved.

Furthermore, if the air pressure of the inner tube 10 is less than standard vehicle air pressure, the tire casing 20 remains in its original shape.

Specifically, the standard vehicle air pressure herein refers to the air pressure of the inner tube 10 when the vehicle runs at normal load and normal speed. The tire casing 20 is made of a special material, such that the formed tire casing 20 has good supporting performance. Generally, when the air pressure of the inner tube 10 is less than the standard vehicle air pressure, tires of the vehicle may collapse. However, since the tire casing 20 of the embodiment of the present invention has good supporting performance, the tire casing 20 of the embodiment of the present invention may still keep its original shape, and volume of the inner tube 10 decreases with the reduction of the air pressure of the inner tube 10, such that a certain distance is formed between the inner tube 10 and the tire casing 20, thereby avoiding contact of the inner tube 10 and the tire casing 20, and accordingly avoiding the inner tube 10 from being damaged due to friction.

Furthermore, the lubricating layer 30 is formed by coating one of an oil, graphite, an emulsion, a grease and a release agent.

Specifically, the lubricating layer 30 is provided between the inner tube 10 and the tire casing 20 through a coating process, and the lubricating layer 30 is made of any one of, but not limited to, an oil, graphite, an emulsion, a grease and a release agent, and those materials have good lubricating performance so as to effectively reduce the friction force when the inner tube 10 and the tire casing 20 slide relative to each other, and further reduce possibility that the inner tube 10 is worn out and leaks air.

In another preferred embodiments of the present invention, the lubricant layer 30 is formed by spraying a release agent.

The release agent has good placing adhesion characteristics, that is, through the arrangement of the release agent the inner tube 10 and the tire casing 20 may be effectively separated, so as to effectively reduce the friction force when the inner tube 10 and the tire casing 20 slide relative to each other, and further reduce the possibility that the inner tube 10 is worn out and leaks air.

The release agent may be more uniformly distributed between the inner tube 10 and the tire casing 20 through a spraying process, such that a more uniform lubricating layer 30 is formed, and thus the lubricating performance of the lubricating layer 30 is further improved.

Furthermore, in a possible embodiment of the present invention, the lubricating layer 30 is provided on the outer surface of the inner tube 10.

Specifically, the lubricating layer 30 is provided on the outer surface of the inner tube 10 in contact with the inner cavity 210 by coating, spraying, or the like. It should be noted here that, in order to ensure a relative rest between the inner tube 10 and the wheel hub, the lubricating layer is generally not provided on the surface of the inner tube 10 in contact with the wheel hub, and that is, only part of the outer surface of the inner tube 10 is provided with the lubricating layer 30.

In addition, in another possible embodiment of the present invention, the lubricating layer 30 is provided on a surface of the inner cavity 210.

Herein, the lubricating layer 30 is provided on the tire casing 20 by coating, spraying or the like. Since the inner cavity 210 of the tire casing 20 is in full contact with the inner tube 10, that is the lubricating layer 30 is specifically provided on the surface of the inner cavity 210, as illustrated in the drawings, shape of the lubricating layer 30 is similar to shape of the inner cavity 210 of the tire casing 20.

In addition, in another preferred embodiments of the present invention, a cross section of the inner tube 10 is in a shape of a water droplet.

Specifically, when the tire stands on the ground, a width of one end of the inner tube 10 close to the ground is greater than a width of one end away from the ground, and the width of the inner tube 10 gradually decreases from one end close to the ground to one end away from the ground, such that the cross section of the inner tube 10 is in shape of a water droplet. The thickness of each two tire shoulders 120 of the inner tube 10 is designed to be greater than the thickness of any other part of the inner tube 10 to ensure that when the air pressure in the inner tube 10 is reduced, the part with large thickness firstly contracts, so as to further separate the part from the tire casing 120, and the inner tube 10 and the tire casing 20 do not rub against each other when the inner tube 10 and the tire casing 20 slide relative to each other, so as to further avoid the inner tube 10 from being worn out by the tire casing 20 and then causing the air leakage.

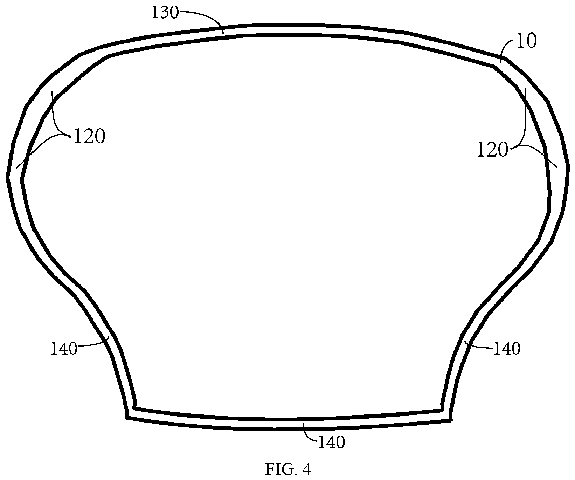

Furthermore, referring to FIG. 4, a schematic cross-sectional view of an inner tube of a tire is provided according to an embodiment of the present invention, radially upper portions of the two tire shoulders 120 are a contact portion 130 of the inner tube 10, and radially lower portions of the two tire shoulders 120 are a support portion 140 of the inner tube 10, and a length of the support portion 140 is greater than a length of the contact portion 130 in a circumferential direction of the inner tube 10, and a width of the support portion 140 gradually decreases from the two tire shoulders 120 to an inner side of the inner tube 10.

Specifically, the contact portion 130 is an upper part of the tire shoulder 120, and is in contact with a tire crown of the tire casing 20 when the inner tube 10 is in an inflated state. The support portion 140 is a lower portion of the tire shoulder 120 and plays a supporting role when the inner tube 10 is in the inflated state. A length of the support portion 140 is longer than that of the contact portion 130, such that the support portion 140 has a relatively high height in the cross section of the inner tube 10, and in the cross section of the inner tube 10, the width of the support portion 140 gradually decreases from the two tire shoulders 120 to the inner side of the inner tube 10, such that the cross section of the inner tube 10 is made to be large at top and small at bottom, such as an inverted water droplet. The inner tube 10 designed in such a shape has a relatively good supportability when the inner tube 10 is in the inflated state, and when the air pressure of the inner tube 10 is reduced, the tire shoulder 120 of the inner tube 10 contracts firstly and then is separated from the tire casing 20, thereby further avoiding the inner tube 10 from being damaged due to friction.

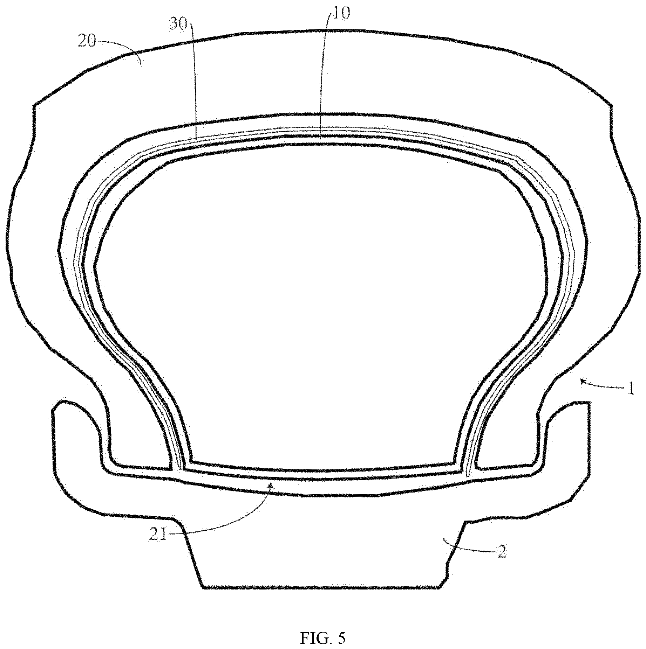

Referring to FIG. 5, a schematic cross-sectional view of a wheel according to an embodiment of the present invention is provided, and the wheel includes a tire 1 and a hub 2.

The tire 1 includes an inner tube 10, a tire casing 20, and a lubricating layer 30, the tire 1 is any one of the tires in the above embodiments, and for the specific structure thereof, reference is made to the description of the above embodiments, which will not be described in detail herein.

The hub 2 is defined with a mounting groove 21, the tire 1 is mounted on the mounting groove 21 of the hub 2, other configurations of the wheel and associated connection relationships being known to those skilled in the art, and to which the embodiment of the present invention will not be described.

In addition, an embodiment of the present invention also provides a vehicle including the wheels mentioned in the above embodiments, through which the vehicle may be driven on the ground, with reference to the above description of the embodiments.

## Claims

1. A tire (1) comprising an inner tube (10), a tire casing (20) being a semi-closed annular structure and a lubricating layer (30);
the inner tube (10) being an annular closed structure and provided with a valve (110), the valve (110) being provided on a surface of the inner tube (10) and extending toward a center of the annular closed structure, the inner tube (10) being inflated through the valve (110) to be a pneumatic tire, the tire casing (20) being defined with an inner cavity (210), the inner tube (10) being provided in the inner cavity (210), and the lubricating layer (30) being provided between the inner tube (10) and the tire casing (20);
wherein each side of the inner tube (10) is provided with a tire shoulder (120);
wherein the lubricating layer (30) is provided on an outer surface of the inner tube (10) or a surface of the inner cavity (210);
wherein a cross section of the inner tube (10) is in a shape of a water droplet, **characterized in that**
a thickness of each tire shoulder (120) is 1.1 to 2 times a thickness of any other part of the inner tube (10);
at least 4 layers of cord fabric are provided in a tire crown of the tire casing (20);
at least 6 layers of cord fabric are provided in two tire sides (230) of the tire casing (20), respectively; and
specification of the cord fabric is less than 1260D/2, and the cord fabric is woven from yarn.

2. The tire (1) according to claim 1, wherein the lubricating layer (30) is formed by coating one of an oil, graphite, an emulsion, a grease and a release agent.

3. The tire (1) according to claim 1, wherein the lubricating layer (30) is formed by spraying a release agent.

4. The tire (1) according to claim 3 wherein radially upper portions of the two tire shoulders (120) are a contact portion (130) of the inner tube (10), radially lower portions of the two tire shoulders (120) are a support portion (140) of the inner tube (10), a length of the support portion (140) is greater than a length of the contact portion (130) in a circumferential direction of the inner tube (10), and a width of the support portion (140) gradually decreases from the two tire shoulders (120) to an inner side of the inner tube (10).

5. The tire (1) according to claim 1, wherein the thickness of each tire shoulder (120) is 1.2 times the thickness of any other part of the inner tube (10).

6. A wheel, comprising:
the tire (1) according to any one of claims 1 to 5; and
a hub (2), the tire (1) being mounted to a mounting groove (21) of the hub (2).

7. A vehicle, comprising:
the wheel according to claim 6.

## Patentansprüche

1. Reifen (1), der einen Innenschlauch (10), eine Reifenkarkasse (20), die eine halbgeschlossene ringförmige Struktur ist, und eine Schmierschicht (30) umfasst;
wobei der Innenschlauch (10) eine ringförmige, geschlossene Struktur ist und mit einem Ventil (110) bereitgestellt ist, wobei das Ventil (110) auf einer Oberfläche des Innenschlauchs (10) bereitgestellt ist und sich in Richtung einer Mitte der ringförmigen, geschlossenen Struktur erstreckt, wobei der Innenschlauch (10) durch das Ventil (110) zu einem Luftreifen aufgepumpt wird, wobei die Reifenkarkasse (20) mit einem Innenhohlraum (210) definiert ist, wobei der Innenschlauch (10) in dem Innenhohlraum (210) bereitgestellt ist und wobei die Schmierschicht (30) zwischen dem Innenschlauch (10) und der Reifenkarkasse (20) bereitgestellt ist;
wobei jede Seite des Innenschlauchs (10) mit einer Reifenschulter (120) bereitgestellt ist;
wobei die Schmierschicht (30) auf einer Außenoberfläche des Innenschlauchs (10) oder einer Oberfläche des Innenhohlraums (210) bereitgestellt ist;
wobei ein Querschnitt des Innenschlauchs (10) eine Form eines Wassertropfens aufweist, **dadurch gekennzeichnet, dass** eine Dicke jeder Reifenschulter (120) das 1,1- bis 2-Fache einer Dicke jedes anderen Teils des Innenschlauchs (10) beträgt;
in einer Reifenlauffläche der Reifenkarkasse (20) mindestens 4 Lagen Cordgewebe bereitgestellt sind;
in zwei Reifenseiten (230) der Reifenkarkasse (20) jeweils mindestens 6 Lagen Cordgewebe bereitgestellt sind und
eine Spezifikation des Cordgewebes weniger als 1260D/2 beträgt und das Cordgewebe aus Garn gewebt ist.

2. Reifen (1) nach Anspruch 1, wobei die Schmierschicht (30) durch Auftragen eines von einem Öl, Graphit, einer Emulsion, einem Fett oder einem Trennmittel gebildet ist.

3. Reifen (1) nach Anspruch 1, wobei die Schmierschicht (30) durch Aufsprühen eines Trennmittels gebildet ist.

4. Reifen (1) nach Anspruch 3, wobei radial obere Abschnitte der zwei Reifenschultern (120) ein Kontaktabschnitt (130) des Innenschlauchs (10) sind, radial untere Abschnitte der zwei Reifenschultern (120) ein Stützabschnitt (140) des Innenschlauchs (10) sind, eine Länge des Stützabschnitts (140) in Umfangsrichtung des Innenschlauchs (10) größer ist als eine Länge des Kontaktabschnitts (130) und eine Breite des Stützabschnitts (140) von den zwei Reifenschultern (120) zu einer Innenseite des Innenschlauchs (10) hin allmählich abnimmt.

5. Reifen (1) nach Anspruch 1, wobei die Dicke jeder Reifenschulter (120) das 1,2-Fache der Dicke jedes anderen Teils des Innenschlauchs (10) beträgt.

6. Rad, umfassend:
den Reifen (1) nach einem der Ansprüche 1 bis 5 und
eine Nabe (2), wobei der Reifen (1) an einer Montagenut (21) der Nabe (2) montiert ist.

7. Fahrzeug, umfassend:
das Rad nach Anspruch 6.

## Revendications

1. Pneu (1) comprenant une chambre à air (10), une carcasse de pneu (20) étant une structure annulaire semi-fermée et une couche lubrifiante (30) ;
la chambre à air (10) étant une structure fermée annulaire et pourvue d'une valve (110), la valve (110) étant disposée sur une surface de la chambre à air (10) et s'étendant vers un centre de la structure fermée annulaire, la chambre à air (10) étant gonflée par la valve (110) pour devenir un pneumatique, la carcasse de pneu (20) étant définie par une cavité interne (210), la chambre à air (10) étant disposée dans la cavité interne (210), et la couche lubrifiante (30) étant disposée entre la chambre à air (10) et la carcasse de pneu (20) ;
dans lequel chaque côté de la chambre à air (10) est doté d'un épaulement de pneu (120) ;
dans lequel la couche lubrifiante (30) est disposée sur une surface externe de la chambre à air (10) ou sur une surface de la cavité interne (210) ;
dans lequel une section transversale de la chambre à air (10) a la forme d'une goutte d'eau, **caractérisé par le fait qu'**une épaisseur de chaque épaulement de pneu (120) fait de 1,1 à 2 fois une épaisseur de toute autre partie de la chambre à air (10) ;
au moins 4 couches de tissu câblé sont disposées dans un sommet de pneu de la carcasse de pneu (20) ;
au moins 6 couches de tissu câblé sont disposées sur deux côtés de pneu (230) de la carcasse de pneu (20), respectivement ; et
la spécification du tissu câblé est inférieure à 1260D/2, et le tissu câblé est tissé à partir de fil.

2. Pneu (1) selon la revendication 1, dans lequel la couche lubrifiante (30) est formée par revêtement d'un parmi une huile, du graphite, une émulsion, une graisse et un agent de démoulage.

3. Pneu (1) selon la revendication 1, dans lequel la couche lubrifiante (30) est formée par pulvérisation d'un agent de démoulage.

4. Pneu (1) selon la revendication 3, dans lequel des parties radialement supérieures des deux épaulements de pneu (120) sont une partie de contact (130) de la chambre à air (10), des parties radialement inférieures des deux épaulements de pneu (120) sont une partie de support (140) de la chambre à air (10), une longueur de la partie de support (140) est supérieure à une longueur de la partie de contact (130) dans une direction circonférentielle de la chambre à air (10), et une largeur de la partie de support (140) diminue progressivement depuis les deux épaulements de pneu (120) jusqu'à un côté interne de la chambre à air (10).

5. Pneu (1) selon la revendication 1, dans lequel l'épaisseur de chaque épaulement de pneu (120) fait 1,2 fois l'épaisseur de toute autre partie de la chambre à air (10).

6. Roue, comprenant :
le pneu (1) selon l'une quelconque des revendications 1 à 5 ; et
un moyeu (2), le pneu (1) étant monté sur une rainure de montage (21) du moyeu (2).

7. Véhicule, comprenant :
la roue selon la revendication 6.
